# EUROPEAN PATENT SPECIFICATION

(11) **EP 2 393 220 B1**
(45) Date of publication and mention of the grant of the patent: **08.07.2015**
(21) Application number: 10305587.7
(22) Date of filing: 03.06.2010
(51) Int. Cl.: H04B 10/80, H04B 3/44

(54) **Undersea optical and electrical distribution apparatus**
Unterwasser-Licht- und Stromverteilvorrichtung
Appareil de distribution optique et électrique sous-marine

(43) Date of publication of application: 07.12.2011
(73) Proprietor: ALCATEL LUCENT, 92100 Boulogne-Billancourt (FR)
(72) Inventor: Verhaege, Thierry, 91620, NOZAY (FR); Michel, Ronan, 91620, NOZAY (FR)

(56) References cited:
- EP-A1- 1 357 679
- EP-A1- 1 841 086
- WO-A2-2005/094321
- US-A- 5 719 693
- US-A1- 2003 021 556
- US-A1- 2003 108 351
- US-A1- 2004 130 215

## Description

### Field of the invention

The invention relates to the technical field of undersea power distribution systems, especially for undersea communications system that employ hybrid optical and electrical cables to transmit both electrical power and optical data signals in a combined manner.

### Background

Advances in optical fibers over which optical data signals may be transmitted, as well as advances in wavelength division multiplexing (WDM) techniques, have resulted in optical technologies being widely used for long haul telecommunications e.g. transoceanic. A conventional undersea communications system typically includes components such as repeaters to compensate for the attenuation of the optical signal, branching units to connect branch lines to a main trunk and hybrid optical and electrical cables which transmit both optical data signals and DC electrical power to supply power to the repeaters.

US-A-2003/108351 discloses an ultra-long haul optical communication system intended to reduce a number of optical signal terminations. An optical fiber terminated only at a first end and a second end comprises a first plurality of line units and a second plurality of line units located between the first and second ends for amplification of optical signals. A power cable providing power to the line units is terminated at a location between the first plurality of line units and the second plurality of line units, namely the power cable is split in two sections.

EP-A-1357679 discloses a land based electrical power feed for supplying power to repeaters in a submarine optical communication system. A plurality of electrical converters are controlled independently to vary a total output power of the power feed.

US -A-2003/0021556 discloses a mateable high-pressure underwater junction box with power and control connections..

### Summary

According to a first object, an undersea power distribution system is provided according to claim 1.

According to embodiments, the undersea power distribution system may comprise one or more of the features of the embodiments below.

In an embodiment, the first and the second locations are devoid of any sea earthing electrode. Therefore, local electrochemical effects of such electrodes, i.e. hydrogen generation and/or metal corrosion may be suppressed with respect to the electric converters at the first and second locations.

In an embodiment, the intermediate point of the primary electric line is connected to a sea earthing electrode.

In an embodiment, the undersea power distribution system further comprises an undersea switch for selectively connecting and disconnecting the intermediate point of the primary electric line to and from the sea earthing electrode.

With the sea earthing electrode connected, the primary electric line of the undersea power distribution system may be operated as a monopole line with a shared sea return path for both electric converters. As the sea earthing electrode is connected to the primary electric line at an intermediate point between the two end sections having mutually opposite feed polarities, the sea earthing electrode operates as a positive sea earth for one of the two electric converters or converter groups and as a negative sea earth for the other of the two electric converters or converter groups. Therefore, if the primary electric line becomes interrupted by accident between the sea earthing electrode and one of the end sections, the portion of the primary electric line between between the sea earthing electrode and the other end section may still operate as a subsystem with positive or negative sea earth.

Further, as long as the primary line is uninterrupted, an electric current that flows to the return path through the sea earth electrode is the sum of a positive current that would exist in a separate system having a negative sea earth and a negative current that would exist in a separate system having a positive sea earth. The resulting return current can thus be made much lower than in such separate systems, which leads to much lower corrosion for any equipment located in the vicinity of the sea earthing electrode or on the return path. Hence, the primary line may also operate with the sea earthing electrode disconnected.

With the sea earthing electrode disconnected, line insulation measurements may be performed from the ends of the primary electric line to locate defects such a shunt locations.

In an embodiment, the primary electric line is a monopole line and the first and the second secondary electric lines are dipole lines.

In an embodiment, a voltage rating of the primary electric line is higher than a voltage rating of the first and the second secondary electric lines.

The high voltage with which the primary electric line is supplied may be selected as a function of different parameters, including distance to be covered and system design cost. In an embodiment, the high voltage supplied by the direct-current power feed system is between 1 kV and 1000 kV with respect to ground.

In an embodiment, the electric converters are adapted to generate a lower voltage with respect to ground than the direct-current power feed system.

The lower voltage with which the secondary electric lines are supplied may be selected as a function of different parameters, including distance to be covered, system design cost and user equipment requirements. In an embodiment, the lower voltage generated by the electric converters is between 1 V and 1000 V with respect to ground.

The undersea power distribution system may serve to supply electric power to one or more undersea user equipments. In an embodiment, the undersea power distribution system comprises a first plurality of undersea electric converters connected in series with the primary electric line at a plurality of first locations between the intermediate point and the first end section,
a second plurality of undersea electric converters connected in series with the primary electric line at a second plurality of locations between the intermediate point and the second end section,
a plurality of first secondary electric lines each adapted to connect the output of an electric converter of the first plurality to a respective undersea user equipment to supply power at the controlled voltage or current to the respective undersea user equipment, and
a plurality of second secondary electric lines each adapted to connect the output of an electric converter of the second plurality to a respective undersea user equipment to supply power at the controlled voltage or current to the undersea user equipment redundantly with a corresponding first secondary electric line.

Such an undersea power distribution system may be designed autonomously or as part of an undersea communications system. In a corresponding embodiment, the primary electric line comprises an electric conductor of a trunk cable, and each of the first and the second locations comprises an optical and electrical distribution apparatus comprising:
an electrical unit , an optical unit and a control unit,
a first and a second connectors suitable for attaching a first and a second sections of the trunk cable to the apparatus, the first and the second connectors each arranged for connecting the electric conductor of the trunk cable to the electrical unit in order to supply the high-voltage electrical current to the electrical unit and for connecting an optical conductor of the trunk cable to the optical unit,
wherein the optical unit comprises an optical path for passing optical signals between the first and the second connectors and an amplification module for amplifying the optical signals in the optical path,
wherein the electrical unit comprises a power supply module for supplying electric power to the amplification module and the control unit, and the said first or second electric converter, and
a third connector suitable for attaching the said first or second secondary electric line to the apparatus, for supplying the power at controlled voltage or current to the undersea user equipment.

According to embodiments, the undersea communications system may comprise one or more of the features of the embodiments below.

In an embodiment of the undersea communications system, at least one of the first and the second secondary electric lines is constituted by an electric conductor of a secondary cable, wherein the secondary cable further comprises an optical conductor adapted to transport optical information signals,
wherein the optical unit further comprises at least one of an add module arranged for directing optical signals from the secondary cable to the trunk cable and a drop module arranged for directing optical signals from the trunk cable to the secondary cable.

In an embodiment, the undersea communications system has a ring architecture, wherein both end sections of the trunk cable are optically connected to a ring hub node, wherein the ring hub node transmits information redundantly in mutually opposite directions through the optical conductor of the trunk cable.

The invention provides also a user equipment connectable to an undersea power distribution system according to the first object, wherein the user equipment comprises a redundant electrical connection arrangement adapted to draw electric power from the first and the second secondary electric lines of the system.

The redundant connection arrangement of the undersea user equipment may be designed in a number of ways, e.g. with a switch for selecting one of the secondary electric lines as a power source. In an embodiment, the redundant connection arrangement includes a diode bridge connectable to the first and the second secondary electric lines for drawing power from a higher one of the two low-voltages supplied by the first and the second secondary lines.

In an embodiment, the user equipment is connectable to a first and a second secondary cables comprising the first and the second secondary electric lines, the undersea user equipment further comprising an optical communications terminal adapted to receive and/or transmit optical information signals through the first and the second secondary cables.

In an embodiment, the undersea user equipment further comprises an optical protection switch adapted to connect the optical communications terminal selectively to the first or the second secondary cable to receive and/or transmit optical information signals.

In an embodiment, the undersea user equipment comprises a sea earthing electrode.

According to a second object, an optical and electrical distribution apparatus for use in an undersea communications system comprises: an electrical unit, an optical unit and a control unit,
first, second and third connectors suitable for respectively attaching first, second and third cables to the apparatus, the first, second and third connectors being arranged for connecting a respective electrical conductor of the first, second and third cables to the electrical unit and for connecting a respective optical conductor of the first, second and third cables to the optical unit,
wherein the optical unit comprises an optical path for passing optical signals between the first and second connectors, an amplification module for amplifying the optical signals in the optical path, and at least one of an add module arranged for directing optical signals from the third connector to at least one of the first and second connectors and a drop module arranged for directing optical signals from at least one of the first and second connectors to the third connector and,
wherein the electrical unit comprises a power supply module for supplying electrical power to the amplification module and the control unit, and an electric converter adapted to extract power from the first or second connector and to supply power at a controlled current or voltage to the third connector.

The optical unit may be unidirectional or bidirectional. In a unidirectional embodiment, the optical path is adapted to forward optical signals from one of the first and second connectors, which operates only as an optical input, to the other, which operates only as an optical output. In a bidirectional embodiment, the first and second connectors each comprise bidirectional optical ports and the optical unit comprises a first optical path for forwarding optical signals from the first connector to the second connector and a second optical path for forwarding optical signals from the second connector to the first connector. Optical amplifiers may be provided in one of the optical paths or both.

A variety of designs are possible for the add module and drop module. The drop module may be designed to provide a unidirectional drop function, e.g. dropping to the third connector optical signals which come only from the first connector, or a bidirectional drop function, e.g. dropping to the third connector optical signals which come from both the first and second connectors. A drop module providing bidirectional drop functions may be made of two or more submodules each providing unidirectional drop functions. Similar options exist with respect to the design of the add module.

Depending on application cases, the drop module may be designed to provide drop functions of various scopes, e.g. dropping the entire optical traffic of one or more optical fibers of the first cable to the third connector or dropping a subset of that traffic selected as a function of wavelength. In embodiments, the drop module comprises fixed components, e.g. an optical filter, and/or reconfigurable components, e.g. a wavelength selective switch, arranged to select optical signals to be dropped as a function of wavelength. Similar options exist with respect to the design of the add module and the design of the optical path (forwarding function).

In an embodiment, active components of the add module and/or drop module such as a wavelength selective switch may be controlled by the control unit.

The amplification module may be based on different technologies, e.g. Erbium-Doped Fiber (EDF) or distributed Roman amplification. In embodiments, the amplification module comprises one or more pump laser sources.

In a further embodiment, the apparatus comprises a supervisory information decoder for decoding supervisory information received through the first or second connector. Depending on application cases, supervisory information may be received through an optical or an electrical channel, e.g. from a shore station. Methods suitable for providing supervisory information through an optical channel include modulating the envelope of a WDM data signal in amplitude and using a separate wavelength channel for supervisory information. In corresponding embodiments, the supervisory information decoder is connected to a photodetector to decode supervisory information modulated onto an optical signal.

In a further embodiment, the apparatus comprises a supervisory information encoder for encoding and transmitting supervisory information to a shore station through the first or second connector.

In embodiments, the electrical unit further comprises a switch adapted to selectively connect an electrical port of the third connector to the electric converter. The switch may be used to switch on and off the low voltage electrical power to the third connector on demand, e.g. based on supervisory information or commands.

In embodiments, the electrical unit further comprises a fault protection module adapted to trigger disconnection of the third connector from the electric converter in response to a fault condition. Such a fault protection module may be designed to detect and handle different types of fault conditions, e.g. overheat, overcurrent and other. In an embodiment, the fault protection module is adapted to respond to a current surge.

The electric converter may be designed in a number of ways. In an embodiment, the electrical unit comprises a high-voltage line and the electric converter comprises a primary winding coupled to the high-voltage line through a switching arrangement and a secondary winding coupled to an electrical port of the third connector through a rectifier bridge, wherein the switching arrangement is configured to alternately feed and bypass the primary winding of the electric converter. Such a switching arrangement may be controlled to fulfill specific requirements, e.g. controlling the duration of the bypass periods in order to keep a load voltage at a constant value.

The control unit provided in the distribution apparatus may serve a number of purposes. Preferably, the control unit is arranged to provide part or all of the control functions required by the different components of the distribution apparatus. In embodiments, the control unit performs functions such as controlling the amplification module e.g. controlling a driving current of the pump laser sources in the amplification module, controlling the supervisory information encoder and/or decoder, controlling the switching arrangement of the electric converter, and controlling the switch for an electrical port of the third connector. A control unit may be designed as a unitary component, e.g. a printed circuit board, or as distributed components.

Through the third connector, the distribution apparatus may be employed to distribute electrical and/or optical power to and/or exchange optical and/or electrical data signals with a variety of undersea equipments, such as communications terminals, sensors and scientific instruments, actuators and robots. In a more specific exemplary embodiment, the third cable is arranged to directly or indirectly connect the distribution apparatus to a measurement device to supply the measurement device with the power at controlled voltage or current and to send measurement data modulated onto optical signals to the distribution apparatus. In another exemplary embodiment, the third cable is arranged to directly or indirectly connect the distribution apparatus to a robot to supply the robot with the power at controlled voltage or current and to send control data modulated onto optical signals to the robot.

To allow connecting a plurality of undersea devices, in preferred embodiments, the distribution apparatus comprises a plurality of third connectors, each suitable for attaching a third cable to the apparatus, each third connector arranged for connecting an electrical conductor of the third cable to the electric converter for supplying power at a controlled current or voltage to the third cable and for connecting an optical conductor of the second cable to at least one of an optical add port of the add module and an optical drop port of the drop module. In an embodiment, the plurality of third connectors are connected in parallel to an output of the electric converter.

The invention provides also an undersea communications system comprising a distribution apparatus as defined hereinabove connected to first, second and third cables, wherein at least one of the first and second cables is arranged to connect the distribution apparatus to a shore station.

The cables may be made in a number of ways. In an embodiment, the third cable is intended to span a shorter distance, e.g. to join an end user equipment, than the first and second cables, e.g. to join a shore station. For the sake of economy, a voltage rating of the third connector or cable may be lower than a voltage rating of the first and second connectors or cables.

Aspects of the invention are based on the idea of providing several networking functions related to both power and data signals under both electrical and optical form in a single undersea case. The inventors have realized that some undersea activities and industrial applications, e.g. scientific investigation as well as oil and gas offshore extraction may require some electric power distribution functions, e.g. long-distance power transmission using high voltage direct current, e.g. 10kV, and medium or short distance power transmission using lower voltage direct current, e.g. 400V; autonomously or in addition to telecommunications-related functions, e.g. long-haul optical transmission implying optical amplification and optical add ports and/or drop ports. The inventors have realized that providing a plurality of separate dedicated undersea devices to fulfill these requirements, e.g. optical repeaters, optical branching units, electric converters, electric dispatchers, according to know solutions, would result in high complexity and large expenses, e.g. due to replication of similar generic functions such as mechanical fittings, optical and electrical connections, power supplies, control systems, and protections.

### Brief description of the drawings

These and other aspects of the invention will be apparent from and elucidated with reference to the embodiments described hereinafter, by way of example, with reference to the drawings.
Figure 1 is a schematic view of an undersea communications system in accordance with an embodiment.
Figure 2 is a schematic and functional representation of a hybrid distribution apparatus which may be used in the system of Figure 1, in accordance with an embodiment.
Figure 3 is a schematic and functional representation of an amplification module which may be used in the apparatus of Figure 2, in accordance with an embodiment.
Figure 4 is a schematic and functional representation of an add and drop module which may be used in the apparatus of Figure 2, in accordance with an embodiment.
Figure 5 is a schematic and functional representation of a supervisory module which may be used in the apparatus of Figure 2, in accordance with an embodiment.
Figure 6 is a schematic and functional representation of an electric converter which may be used in the apparatus of Figure 2, in accordance with an embodiment.
Figure 7 is a schematic and functional representation of a reconfigurable add and drop module which may be used in the apparatus of Figure 2, in accordance with an embodiment.
Figure 8 is a schematic and functional representation of an undersea communications network, in which the apparatus of Figure 2 may be used.
Figure 9 is a schematic and functional representation of undersea user equipment, which may be used in the network of Figure 8,
Figure 10 is a schematic and functional representation of an embodiment of a sea earthing connection, which may be used in the network of Figure 8,
Figure 11 is a schematic and functional representation of another embodiment of a sea earthing connection, which may be used in the network of Figure 8,
Figure 12 is a schematic and functional representation of an embodiment of an optical communications terminal, which may be used in the network of Figure 8.

### Detailed description of the embodiments

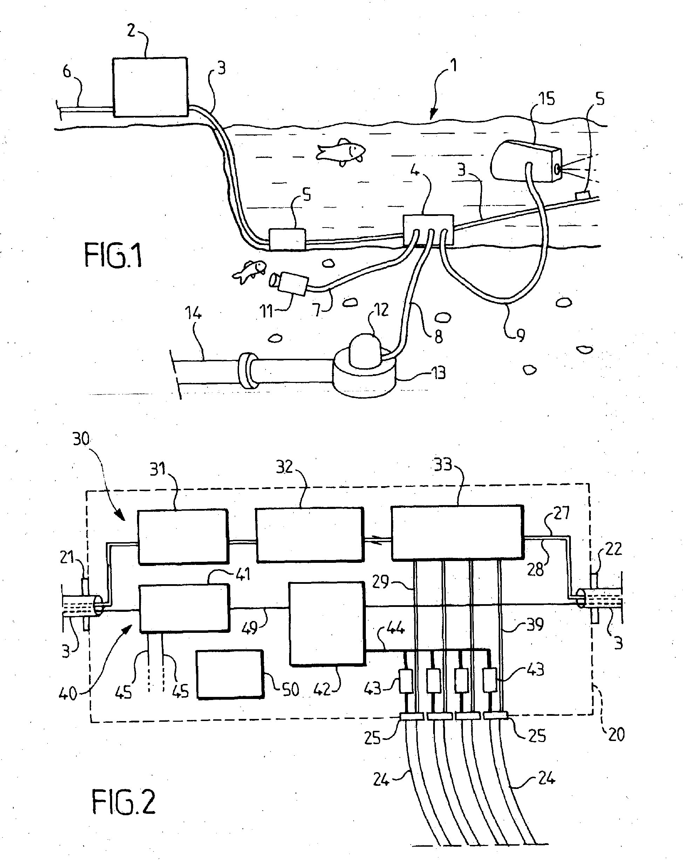

With reference to Figure 1, an undersea communications system comprises an undersea network 1 and a shore station 2. The undersea network 1 at least in a significant part comprises undersea components, both terminals and intermediate components, connected by hybrid electrical and optical cables. In the topology shown on Figure 1, a trunk line 3 starting from the shore station 2 goes to a distribution box 4 and beyond to further parts of the undersea network 1 not shown, e.g. making a closed ring back to shore station 2 or extending to another shore station on another continent. The trunk line 3 may be provided with conventional repeaters 5 to amplify the optical signals at regular intervals, depending on the transmission distance to be covered. The trunk line 3 is made of hybrid cable with a high voltage rating to carry both WDM optical data signals and high voltage DC current to power the repeaters 5.

The shore station comprises power feed equipment to supply the high voltage current to the trunk line, e.g. 10kV voltage. The power rating of the power feed equipment depends on the scale of the system. A 100kW DC power supply may be appropriate for typical applications. The shore station may also comprise communications components, such as routers, data switches, long-reach optical transponders, optical multiplexers and demultiplexers, network management systems, etc. In an embodiment, the shore station 2 interfaces the undersea network 1 with a further terrestrial network 6.

In the undersea network 1, the distribution box 4 connects secondary lines 7, 8 and 9 to the trunk line 3. Secondary lines 7, 8 and 9 are hybrid cables which are connected to a variety of undersea equipments that require both electrical power and optical communications services for their operations. For illustration, Figure 1 shows a video camera 11 connected to line 7, a controlled actuator 12 connected to line 8 for operating a submerged manifold 13 on an oil pipeline 14 and a subsea robot 15 connected to line 9. The distribution box 4 provides electrical power and unidirectional or bidirectional optical communications connections to the equipments. Thus, the connected equipments may be remotely controlled and operated, e.g. from the shore station 2.

Other equipments may be connected to the undersea network 1 in the same manner e.g. scientific instruments (thermal sensors, conductivity-temperature-depth sensors, current meters, hydrophones, sonars, echosounders, acoustic Doppler current profilers, bottom pressure sensors, chemical and gas sensors for measuring carbon dioxide, oxygen, methane, nitrates, etc., seismometers, gravimeters and accelerometers, high-resolution still-frame and video cameras, microbe and plankton samplers and microbial incubators, turbidity sensors, transmissometers, sediment traps, benthic flow simulation chamber) and others, e.g. a charger site for electric submarine vehicles operating on batteries.

Figure 2 shows an exemplary embodiment of the distribution box 4. It may include a pressure-resistant sea case 20 of high tensile steel which houses all the electrical and optical components, a pair of hybrid connectors 21 and 22 to connect the trunk cables 3 and a plurality of secondary hybrid connectors 25 to connect the secondary cables 24. Secondary connectors 25 may be provided in any number, e.g. between 1 and 10 or more, depending on applications. Hybrid connectors with suitable properties in terms of mechanical resistance, electrical losses and optical losses are commercially available. The details of the connectors are not shown on Figure 2.

Within the sea case 20, an optical unit 30 and an electrical unit 40 are shown separately. The optical unit 30 connects the optical ports of the hybrid connector 21 on one side of the sea case 20 to the optical ports of the hybrid connector 22 on the other side of the sea case 20, to allow WDM optical signals to be transmitted transparently through the distribution box 4 further down the trunk cables 3, i.e. without Optical/Electrical/Optical conversion. The optical unit 30 comprises a supervisory module 31 to receive and decode and/or encode and transmit supervisory information, an amplification module 32 to amplify the WDM optical signals and an add and drop module 33 to drop optical signals from the trunk cables 3 to the secondary cables 24 and to add signals from the secondary cables 24 to the trunk cables 3. As shown, the optical unit 30 comprises two fibers 27 and 28 intended for optical signals transmitted from the left-hand port 21 to the right-hand port 22 and optical signals transmitted from the right-hand port 22 to the left-hand port 21 respectively. However a unidirectional optical unit may be designed similarly. Moreover, a higher number of optical fibers may be provided to increase the capacity of the distribution box 4.

The electrical unit 40 comprises a main line 49 that connects the electrical port of the hybrid connector 21 on one side of the sea case 20 to the electrical port of the hybrid connector 22 on the other side of the sea case 20, to allow the high-voltage DC current to be transmitted through the distribution box 4 further down the trunk cables 3, e.g. to feed further repeaters 5. The electrical unit 40 comprises an auxiliary power supply module 41 and a high-power electric converter 42, both of which are fed in series with the high-voltage DC current from the main line 49.

The auxiliary power supply module 41 transfers a small part, e.g. 100 W, of the high-voltage DC power towards one or several buses 45 with low and controlled voltage, e.g. 5V. The buses 45 provide the voltage references necessary to operate the electronic devices present in the central control unit 50, in the supervisory module 31, in the electric converter 42 and in the amplification module 32.

The electric converter 42 converts a significant part, e,g. 10 kW, of the high-voltage DC power into DC power with a lower, controlled voltage, e.g. 400 V. A function of the converter 42 is to supply electric power to the secondary cables 24 at a controlled voltage and current that is independent from the current and voltage received on the trunk cable 3.

Each secondary hybrid connector 25 may have a unidirectional or bidirectional optical port connected to an add port and/or a drop port of the add and drop module 33 by one or several fibers 29, and an electrical port connected to the electric converter 42 by an electric line 44. Protection modules 43 are arranged between the line 44 and each hybrid connector 25 to provide for selective power supply to the electrical port. In an embodiment, a protection module 43 comprises a switch that may be controlled on demand by central control unit 50, as well a fault detection circuitry to detect faulted external loads such as short-circuit or abnormally low impedance and automatically open the switch in response thereto.

The central control unit 50 commands all electronic devices present in the supervisory module 31, in the converter 42 and in the amplification module 32. To do so, the central control unit 50 is provided with a control program, monitoring devices to monitor various parameters of the components and an interface with the supervisory module 31 to receive orders transmitted from the shore station on a supervisory channel. The central control unit 50 may control the transmission of supervisory information to the shore station in a similar manner.

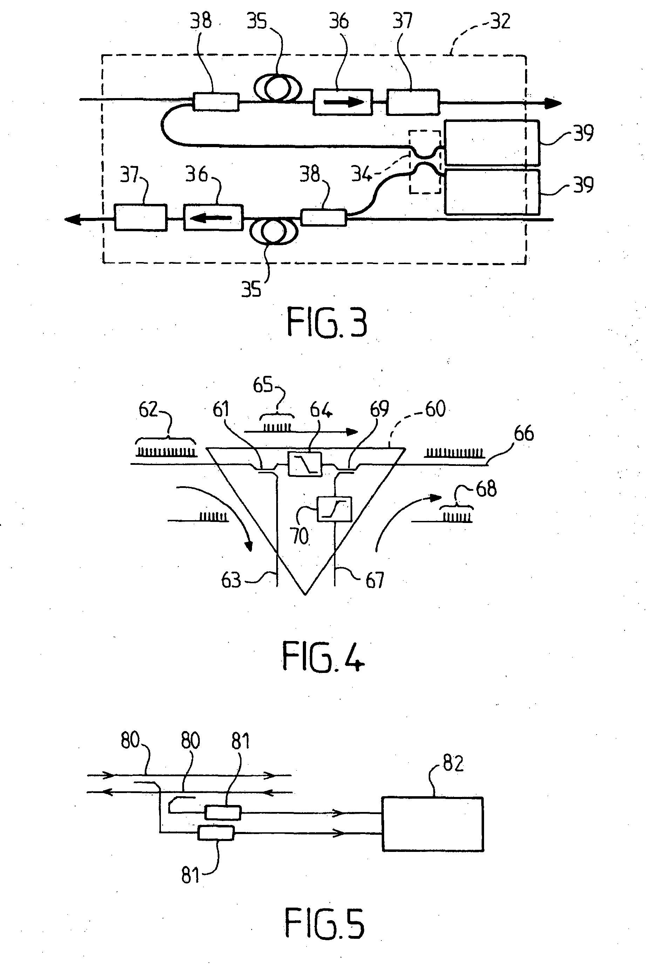

Figure 3 shows an exemplary embodiment of the amplification module 32, suitable for bidirectional communications along the trunk line. For each direction the amplification module 32 comprises a length of EDF 35, an isolator 36, an optical filter 37 and a WDM coupler 38 to inject a pump signal. Pump laser sources 39 generate the pump signals. A 3dB power coupler 34 may be provided to share the pump sources 39 between both directions. The driving current of the pump laser sources 39 may be controlled by control unit 50, e.g. based on supervisory information received from the shore.

Figure 4 shows an exemplary fixed add and drop module 60 suitable for unidirectional communications along the trunk line. In this variant, a coupler 61 broadcasts all wavelength channels 62 coming from the trunk line to the drop line 63. A filter 64 passes only a subset 65 of the channels 62 to the output line 66, whereas the other channels are reserved for the add traffic 68 from the add line 67, which is injected in the output line by a coupler 69. Since all input channels are broadcast, there is an option to fit a data scrambler, which only allows the intended channels to reach the drop port uncorrupted. A filter 70 on the add line 67 blocks any amplified spontaneous emission from the secondary cables to the trunk line. There are many other ways to design fixed add and drop modules, e.g. using optical filters and couplers.

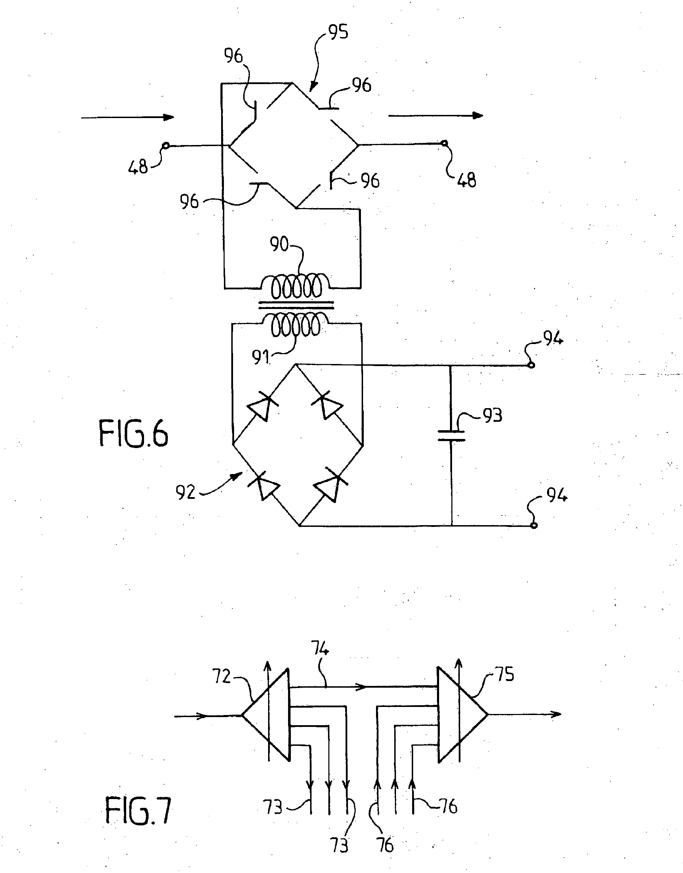

Figure 7 shows an exemplary reconfigurable add and drop module suitable for unidirectional communications along the trunk line. An input wavelength selective switch (WSS) 72 splits an incoming WDM traffic between a plurality of drop lines 73 and a forward line 74 depending on wavelength. The distribution of the channels on each line may be controlled and reconfigured, by supplying appropriate commands to the WSS 72. An output WSS 75 passes a WDM traffic obtained by merging optical signals from the forward line 74 and a plurality of add lines 76, the signals from each line being selected based on their wavelengths. The selection of the channels on each line may be controlled and reconfigured, by supplying appropriate commands to the WSS 75. There are many other ways to design reconfigurable add and drop modules, e.g. using WSSs and couplers.

Figure 5 shows an exemplary embodiment of a supervisory module suitable for receiving supervisory information from both sides of the trunk line. In each direction, the supervisory information is tapped off by an optical coupler 80 and received by a photodiode 81 connected to a decoder 82. The decoder 82 decodes the information using simple logic. The supervisory information may be sent from the shore station 2 by modulating the envelope of the WDM signals at a low-frequency or using a dedicated wavelength channel. In an embodiment not shown, the supervisory module is also able to modulate the envelope of the WDM optical signals so as to send information to the shore station.

Figure 6 shows an exemplary embodiment of the electric converter 42. Primary connection points 48 are connected in series to the main line 49. The electric converter comprises a primary winding 90 connected to the primary connection points 48 by a switching arrangement 95, a secondary winding 91 magnetically coupled to the primary winding 90, a rectifier bridge 92 connected to the secondary winding 91, a capacitor 93 connected in parallel to rectifier bridge 92 and secondary connection points 94 for providing the lower, converted voltage to a user. The switching arrangement 95 comprises four controlled switches 96, which may be controlled so as to supply a substantially constant voltage to loads connected to the connection points 94. Further details on this embodiment of the electric converter are provided in European patent application 09290514.0 filed on 30 June 2009 in the name of Alcatel Lucent, which is incorporated herein by reference in its entirety. The plurality of secondary hybrid connectors 25 may be connected in parallel to connection points 94 through the protection modules 43.

DC power may be distributed either through monopole lines or dipole lines. For the high-voltage in trunk cable 3, a monopole conductor with sea earth return is preferably used for the sake of cost effectiveness. Both the monopole and the dipole techniques may be used for the distribution of the low voltage DC power in the secondary cables 24. In the dipole technique, the electric line 44 and the secondary cables 24 each include two electric wires.

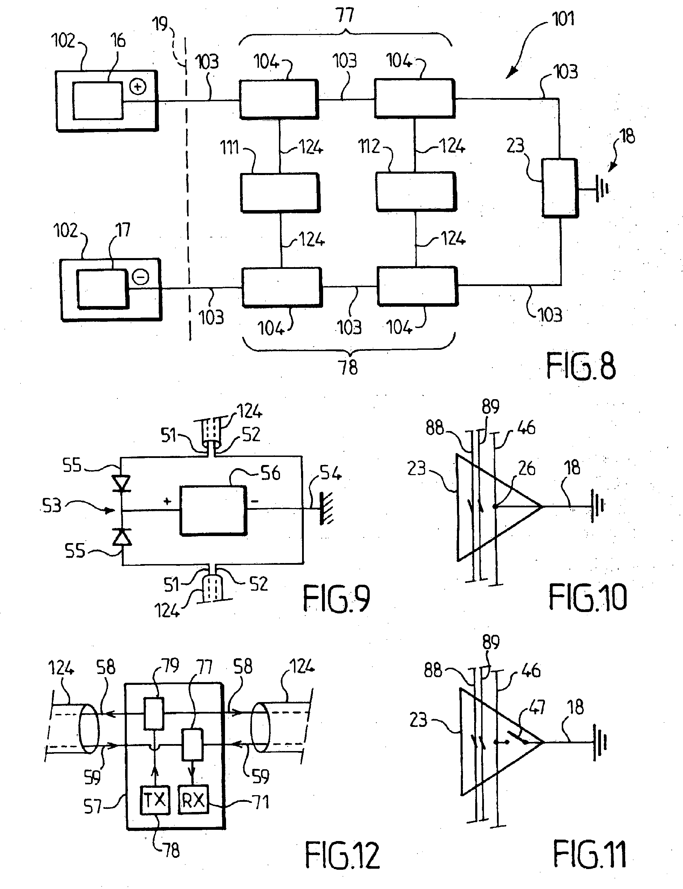

Turning now to Figure 8, there is shown an exemplary topology of an undersea communications network 101 suitable for distributing electric power, and optical communications services as the case may be, in a protected manner to undersea user equipments 111 and 112. Elements that are identical or similar to the elements of Figures 1 and 2 are referred to by the same numeral increased by 100. In Figure 8, line 19 designates a limit between a submerged portion of the system, to the right of line 19 and a dry portion of the system, to the left of line 19.

In Figure 8, a trunk hybrid cable 103 comprises two end sections connected to one or two shore stations 102 and a submerged section that extends there between in the shape of a U. This U-shape is shown for illustrative purposes and does not necessarily correspond to the physical topology of the trunk cable 103. The shore stations 102 may stand at different locations. The shore stations 102 may also stand at the same place or even represent a single shore station to which both ends of the trunk cable 103 are connected e.g. to form a ring topology. At the or each shore station 102, both ends of the electric conductor of the trunk cable 103 are connected to terminals 16 and 17 of a DC power feed equipment to supply a high voltage power to the trunk line. As shown, terminal 16 has a positive polarity whereas terminal 17 has a negative polarity, Therefore, the DC power feed equipment creates a potential difference that tends to generate an electric current flowing from terminal 16 to terminal 17. Terminals 16 and 17 may be provided on a single HVDC generator or on different HVDC generators.

The trunk cable 103 may be provided with any number of optical repeaters, which are not shown here. At an intermediate point under water, the trunk cable 103 is provided with a sea earthing connection module 23 that connects the electric wire of the trunk cable to a sea earthing electrode 18. In the embodiment shown on Figure 10, the connection module 23 makes a permanent connection 26 between the electric wire 46 of the trunk cable and the sea earthing electrode 18. In the embodiment shown on Figure 11, the connection module 23 comprises a switch 47 to selectively close or open the circuit between the electric wire 46 of the trunk cable and the sea earthing electrode 18. The switch 47 may be designed and controlled similarly to power recovery relays in conventional branching units. The sea earthing electrode 18 provides a reference ground potential for the distribution of electric power through the trunk cable 103. The optical fibers 88 and 89 on Figures 10 and 11 are connected to the optical conductor of the trunk cable 103. Thus, the connection module 23 may provide a continuous optical path for WDM signals in both directions.

In Figure 8, the trunk cable 103 is provided with a first group of distribution boxes 77 between the positively polarized terminal 16 and the sea earthing connection module 23 and a second group of distribution boxes 78 between the sea earthing connection module 23 and the negatively polarized terminal 17. Each distribution box 104 may be made identically to the distribution box 4 of Figure 2.

This arrangement of distribution boxes 104 in two groups 77 and 78 has several advantages. Due to the position of the sea earthing electrode 18, the group 77 operates as a negative sea earth system that sends a positive current to the return path, whereas the group 78 operates as a positive sea earth system that sends a negative current to the return path. Due to the combination, a return current flowing through the sea earthing electrode 18 may be kept small and resulting corrosive effects may be reduced. In particular, the return current may be made substantially null by imposing the same electric current at both terminals 16 and 17, e.g. with current-controlled generators. Further, the size and material cost of the sea earthing electrode 18 may be reduced if a current rating of the electrode is small.

In addition, if one of the groups 77 and 78 is powered off, e.g. due to a break of trunk cable 103, the other group may still operate due to the intermediate position of the sea earthing connection module 23. Moreover, since the electric converters of the distribution boxes are connected in series with the trunk cable, they do not require a local sea earthing electrode to operate. Therefore, an electrochemical effect of the return current may be located at the sea earthing connection module 23 only, which may be placed at any suitable location remote from the distribution boxes 104 and the user equipments 111 and 112.

In Figure 8, the elements 111 and 112 represent undersea user equipments that need a low voltage electric power to operate, as well as unidirectional or bidirectional optical communication with the shore and/or with one another. As shown, each user equipment is connected to two distribution boxes 104, one in each group, through secondary hybrid cables 124 that are connected to the secondary connectors of the distribution boxes 104. In the example shown, one secondary connector is used in each distribution box 104. This arrangement makes it possible to power the user equipments in a redundant manner, to ensure continuity of operations in case of failure of one of the groups 77 and 78, e.g. due to a trunk cable break. In other words, each user equipment is capable of drawing power from each of the two distribution boxes 104, either in combination or in the alternative.

Figure 9 shows an embodiment of the user equipment that draws electric current from the secondary hybrid cables 124 that supplies the higher voltage. Here, only the electric wires of the hybrid cables 124 are shown at numbers 51 and 52. In the user equipment, the electric wires 51 corresponding to the positive potential are connected to a diode bridge 53 made of two diodes 55, whereas the electric wires 52 corresponding to the neutral potential are connected to a grounding point 54, e.g. the case of the undersea equipment or a sea earthing electrode. The electric load of the user equipment schematically shown at 56 is connected between the diode bridge 53 and the grounding point 54. As the function of diodes 55 involves no moving part, it is highly reliable and durable.

If the undersea user equipment only requires electric power, the undersea communications network 101 of figure 8 may be simplified in a straightforward manner to provide a pure electric distribution network. In that case, hybrid cables are replaced with electric cables and the optical units of the distribution boxes 104 may be suppressed.

However, the communications network 101 of figure 8 is mostly suitable for undersea user equipment that requires optical communications, e.g. high speed transmission of data to the shore and/or to another subsea equipment or high-speed data reception from the shore and/or from another subsea equipment, or both. Due to the provision of add and drop modules in the distribution boxes 104, a unidirectional or bidirectional optical path between the user equipment and the shore may be obtained through one of the distribution boxes 104 or through both. The second option is especially suitable for providing protected optical communications services. A corresponding embodiment of a communications terminal for user equipment is shown on Figure 12.

Referring to Figure 12, only the optical fibers of the secondary hybrid cables 124 are shown. An optical fiber 58 operating as an add fiber is connected to an add port of the add and drop module in the corresponding distribution box 104, whereas an optical fiber 59 operating as a drop fiber is connected to a drop port of the add and drop module in the corresponding distribution box 104. The optical communications terminal 57 comprises an optical receiver 71 connected to an optical protection switch 77 which has two inputs connected to the optical fibers 59 respectively, and an optical transmitter 78 connected to an optical protection switch 79 which has two outputs connected to the optical fibers 58 respectively. In a normal state, the optical protection switches 77 and 79 are linking the terminal 57 to one of the two secondary hybrid cables 124 and to the corresponding distribution box 104. In case a failure occurs in this communication path, the protection switches reconfigure automatically or on demand to link the terminal 57 to the other secondary hybrid cables 124 and to the corresponding distribution box 104. At the distribution box 104, the add and drop module may be arranged to route the add signals to one end of the trunk cable only and to extract the drop signals from one end of the trunk cable only. In other words it is not necessary to provide an add function to both primary hybrid connectors or to provide a drop function for both primary hybrid connectors since optical path redundancy may be achieved through two distribution boxes 104. Optical protection switches 77 and 79 may also be replaced with optical couplers.

In the case of a ring network, the network head may be arranged to send traffic redundantly through both ends of the trunk cable as in a conventional dual fiber protected ring.

The distribution box 4 of Figure 2 may be adapted to provide further distribution functions from and towards the connected equipments, such as distributing information signals through electrical channels and distributing power through optical channels. In an embodiment, the electrical DC current received on the trunk line 3 carries an information signal as a low frequency amplitude modulation and the electrical unit is designed to transmit that information signal to the secondary hybrid connectors. In another embodiment, the distribution box 4 is adapted to transmit high power optical signals through the secondary hybrid connectors to cover a relatively long distance and/or serve as a source of power for the end equipment connected to the secondary cable.

Elements such as the control unit and electronic devices may be e.g. hardware means like e.g. an ASIC, or a combination of hardware and software means, e.g. an ASIC and an FPGA, or at least one microprocessor and at least one memory with software modules located therein. A network management system may be a hardware device, for example a personal computer, a workstation, an Internet appliance, or other general purpose or specific purpose communications device. A software program running on this system performs network management functions to control the network elements.

The invention is not limited to the described embodiments. The appended claims are to be construed as embodying all modification and alternative constructions that may occur to one skilled in the art, which fairly fall within the basic teaching herein, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several «means».

In the claims, any reference signs placed between parentheses shall not be construed as limiting the scope of the claims.

## Claims

1. An optical and electrical distribution apparatus (4) for use in an undersea communications system (1), the apparatus comprising:
a watertight pressure-resistant case (20) containing an electrical unit (40), an optical unit (30) and a control unit (50),
first, second and third connectors (21, 22, 25) suitable for respectively attaching first, second and third cables (3, 24) to the apparatus, the first, second and third connectors being arranged for connecting a respective electrical conductor of the first, second and third cables to the electrical unit and for connecting a respective optical conductor of the first, second and third cables to the optical unit,
wherein the optical unit comprises an optical path for passing optical signals between the first and second connectors, an amplification module (32) for amplifying the optical signals in the optical path, and at least one of an add module (33) arranged for directing optical signals from the third connector to at least one of the first and second connectors and a drop module (33) arranged for directing optical signals from at least one of the first and second connectors to the third connector and,
wherein the electrical unit comprises a power supply module (41) for supplying electrical power to the amplification module and the control unit, and an electric converter (42) adapted to extract power from the first or second connector and to supply power at a controlled current or voltage to the third connector,
wherein the electric converter is adapted to supply power to the third connector at a lower absolute voltage than an absolute voltage received at the first or second connector.

2. An apparatus in accordance with claim 1, wherein a voltage rating of the third connector (25) or cable (24) is lower than a voltage rating of the first and second connectors (21, 22) or cables (3).

3. An apparatus in accordance with claim 1, wherein the electrical unit further comprises a switch (43) adapted to selectively connect the third connector to the electric converter, wherein the switch is controlled by the control unit (50).

4. An apparatus in accordance with claim 1, wherein the electrical unit further comprises a fault protection module (43) adapted to trigger disconnection of the third connector from the electric converter in response to a fault condition.

5. An apparatus in accordance with claim 1, wherein the add module and/or drop module comprises an optical filter (64) arranged to select optical signals to be added, dropped or forwarded as a function of wavelength.

6. An apparatus in accordance with claim 1, wherein the add module and/or drop module comprises a wavelength selective switch (72, 75) arranged to select optical signals to be added, dropped or forwarded as a function of wavelength in a reconfigurable manner, wherein the wavelength selective switch is controlled by the control unit.

7. An apparatus in accordance with claim 1, wherein the electrical unit comprises a high-voltage line (49) and the electric converter comprises a primary winding (90) coupled to the high-voltage line through a switching arrangement (95) and a secondary winding (91) coupled to an electrical port of the third connector through a rectifier bridge (92), wherein the switching arrangement (95) is configured to alternately feed and bypass the primary winding (90) of the electric converter, wherein the switching arrangement is controlled by the control unit.

8. An apparatus in accordance with claim 1, wherein the amplification module comprises a pump laser source (39), wherein the control unit is arranged to control a driving current of the pump laser source.

9. An apparatus in accordance with claim 1, further comprising a supervisory information decoder (82) for decoding supervisory information received through the first or second connector.

10. An apparatus in accordance with claim 1, further comprising a plurality of third connectors (25), each suitable for attaching a third cable (24) to the apparatus, each third connector arranged for connecting an electrical conductor of the third cable to the electric converter for supplying power at a controlled current or voltage to the third cable and for connecting an optical conductor of the second cable to at least one of an optical add port of the add module and an optical drop port of the drop module.

11. An apparatus in accordance with claim 10, wherein the plurality of third connectors are connected in parallel to an output (44, 94) of the electric converter.

12. An apparatus in accordance with claim 1, wherein the first and second connectors each comprise bidirectional optical ports and the optical unit comprises a first optical path for passing optical signals from the first connector to the second connector and a second optical path for passing optical signals from the second connector to the first connector.

13. An undersea communications system (1) comprising a distribution apparatus (4) in accordance with claim 1 connected to first, second and third cables (3, 24), wherein at least one of the first and second cables is arranged to connect the distribution apparatus to a shore station (2).

14. The system of claim 13, wherein the third cable is arranged to directly or indirectly connect the distribution apparatus to a measurement device (11) to supply the measurement device with the power at controlled voltage or current and to send measurement data modulated onto optical signals to the distribution apparatus.

15. The system of claim 13 or 14, wherein the third cable is arranged to directly or indirectly connect the distribution apparatus to a robot (12, 15) to supply the robot with the power at controlled voltage or current and to send control data modulated onto optical signals to the robot.

## Patentansprüche

1. Optische und elektrische Distributionsvorrichtung (4) für die Nutzung in einem Unterwasserkommunikationssystem (1), wobei die Vorrichtung Folgendes umfasst:
einen wasserdichten und druckfesten Behälter (20) mit einer elektrischen Einheit (40), einer optischen Einheit (30) und einer Steuereinheit (50),
erste, zweite und dritte Verbindungselemente (21, 22, 25), die für die jeweilige Befestigung von ersten, zweiten und dritten Kabeln (3, 24) an die Vorrichtung geeignet sind, wobei die ersten, zweiten und dritten Verbindungselemente angeordnet sind, um einen jeweiligen elektrischen Leiter der ersten, zweiten und dritten Kabel an die elektrische Einheit anzuschließen und um einen jeweiligen optischen Leiter der ersten, zweiten und dritten Kabel an die optische Einheit anzuschließen,
wobei die optische Einheit einen optischen Pfad zum Übermitteln der optischen Signale zwischen den ersten und zweiten Verbindungselementen, ein Verstärkungsmodul (32) zum Verstärken der optischen Signale im optischen Pfad und mindestens ein Zuführungsmodul (33), welches angeordnet ist, um die optischen Signale vom dritten Verbindungselement zu mindestens einem der ersten oder zweiten Verbindungselemente zu leiten, und ein Auswurfmodul (33), welches angeordnet ist, um die optischen Signale von mindestens einem der ersten oder zweiten Verbindungselemente zum dritten Verbindungselemente zu leiten, umfasst, und,
wobei die elektrische Einheit ein Netzteilmodul (41), um das Verstärkungsmodul und die Steuereinheit mit elektrischen Strom zu versorgen, und einen elektrischen Wandler (42) umfasst, der angepasst wurde, um Energie vom ersten oder zweiten Verbindungselement zu entnehmen und um das dritte Verbindungselement mit Energie mit einem geregelten Strom oder einer geregelten Spannung zu versorgen,
wobei der elektrische Wandler fähig ist, das dritte Verbindungselement mit Energie mit weniger absoluter Spannung als der absoluten Spannung zu versorgen, die beim ersten oder zweiten Wandler aufgenommen wird.

2. Vorrichtung nach Anspruch 1, wobei ein Spannungswert des dritten Verbindungselements (25) oder Kabels (24) kleiner als ein Spannungswert der ersten und zweiten Verbindungselemente (21, 22) oder Kabel (3) ist.

3. Vorrichtung nach Anspruch 1, wobei die elektrische Einheit weiterhin einen Schalter (43) umfasst, der fähig ist, das dritte Verbindungselement mit dem elektrischen Wandler selektiv zu verbinden, wobei der Schalter durch die Steuereinheit (50) gesteuert wird.

4. Vorrichtung nach Anspruch 1, wobei die elektrische Einheit weiterhin ein Fehlerschutzmodul (43) umfasst, das fähig ist, die Trennung des dritten Verbindungselements vom elektrischen Wandler als Reaktion auf einen Fehlerzustand auszulösen.

5. Vorrichtung nach Anspruch 1, wobei das Zuführungsmodul und/oder Auswurfmodul einen optischen Filter (64) umfasst, der angeordnet wurde, um hinzuzufügende, zu entfernende oder weiterzuleitende optische Signale in Abhängigkeit von der Wellenlänge auszuwählen.

6. Vorrichtung nach Anspruch 1, wobei das Zuführungsmodul und/oder Auswurfmodul einen wellenabhängigen Schalter (72, 75) umfasst, der angeordnet ist, um hinzuzufügende, zu entfernende oder weiterzuleitende optische Signale in Abhängigkeit von der Wellenlänge auf eine neukonfigurierbare Arte und Weise auszuwählen, wobei der wellenabhängige Schalter durch die Steuereinheit gesteuert wird.

7. Vorrichtung nach Anspruch 1, wobei die elektrische Einheit eine Hochspannungsleitung (49) und der elektrische Wandler eine Primärwicklung (90), die durch eine Schaltanordnung (95) an die Hochspannungsleitung gekoppelt ist sowie eine Sekundärwicklung (91), die durch eine Gleichrichterbrücke (92) an einen elektrischen Anschluss des dritten Verbindungselements gekoppelt wurde, umfasst, wobei die Schaltanordnung (95) konfiguriert ist, um die Primärwicklung (90) des elektrischen Wandlers abwechselnd zu versorgen und zu überbrücken, wobei die Schaltanordnung durch die Steuereinheit gesteuert wird.

8. Vorrichtung nach Anspruch 1, wobei das Verstärkungsmodul eine Pumpenlaserquelle (39) umfasst, wobei die Steuereinheit angeordnet ist, um einen Treiberstrom der Pumpenlaserquelle zu steuern.

9. Vorrichtung nach Anspruch 1, weiterhin umfassend einen Dekodierer von Überwachungsinformationen (82), um durch das erste oder zweite Verbindungselement empfangene Überwachungsinformationen zu entschlüsseln.

10. Vorrichtung nach Anspruch 1, weiterhin umfassend eine Vielzahl von dritten Verbindungselementen (25), jedes für die Verbindung eines dritten Kabels (24) mit der Vorrichtung geeignet, wobei jedes dritte Verbindungselement angeordnet ist, um einen elektrischen Leiter des dritten Kabels mit dem elektrischen Wandler zu verbinden, um das dritte Kabel mit Energie mit einem geregelten Strom oder einer geregelten Spannung zu versorgen und um einen optischen Leiter des zweiten Kabels mit mindestens einem optischen Zuführungsanschluss des Zuführungsmoduls und einen optischen Auswurfanschluss des Auswurfmoduls zu verbinden.

11. Vorrichtung nach Anspruch 10, wobei die Vielzahl von dritten Verbindungselementen parallel mit einem Ausgang (44, 94) des elektrischen Wandlers verbunden ist.

12. Vorrichtung nach Anspruch 1, wobei die ersten und zweiten Verbindungselemente jeweils bidirektionale optische Anschlüsse umfassen und die optische Einheit einen ersten optischen Pfad zum Übermitteln optischer Signale vom ersten Verbindungselement zum zweiten Verbindungselement und einen zweiten optischen Pfad zum Übermitteln optischer Signale vom zweiten Verbindungselement zum ersten Verbindungselement umfasst.

13. Unterwasserkommunikationssystem (1) eine Distributionsvorrichtung (4) nach Anspruch 1 umfassend, die mit dem ersten, zweiten und dritten (3, 24) Kabel verbunden ist, wobei mindestens eines der ersten und zweiten Kabel angeordnet ist, um die Distributionsvorrichtung mit einer Landstation (2) zu verbinden.

14. System nach Anspruch 13, wobei das dritte Kabel angeordnet ist, um direkt oder indirekt die Distributionsvorrichtung mit einem Messgerät (11) zu verbinden, um das Messgerät mit Energie mit einer geregelten Spannung oder einem geregelten Strom zu versorgen und um die auf die optischen Signale modulierten Messdaten an die Distributionsvorrichtung zu senden.

15. System nach Anspruch 13 oder 14, wobei das dritte Kabel angeordnet ist, um direkt oder indirekt die Distributionsvorrichtung (4) mit einem Roboter (12, 15) zu verbinden, um den Roboter mit Energie mit einer geregelten Spannung oder einem geregelten Strom zu versorgen und um die auf die optischen Signale modulierten Steuerdaten an den Roboter zu senden.

## Revendications

1. Appareil de distribution optique et électrique (4) à utiliser dans un système de communication sous-marin (1), l'appareil comprenant :
une enceinte étanche résistant à la pression (20) contenant une unité électrique (40), une unité optique (30) et une unité de commande (50),
un premier, un deuxième et un troisième connecteurs (21, 22, 25) adaptés pour fixer respectivement un premier, un deuxième et un troisième câbles (3, 24) à l'appareil, le premier, le deuxième et le troisième connecteurs étant disposés pour relier un conducteur électrique respectif du premier, du deuxième et du troisième câbles à l'unité électrique et
pour relier un conducteur optique respectif du premier, du deuxième et du troisième câbles à l'unité optique,
dans lequel l'unité optique comprend un chemin optique pour acheminer des signaux optiques entre le premier et le deuxième connecteurs, un module d'amplification (32) pour amplifier les signaux optiques dans le chemin optique, et au moins un module parmi un module d'insertion (33) conçu pour diriger des signaux optiques à partir du troisième connecteur vers au moins un connecteur parmi le premier et le deuxième connecteurs et
un module d'extraction (33) conçu pour diriger des signaux optiques à partir d'au moins un connecteur parmi les premier et deuxième connecteurs vers le troisième connecteur et,
dans lequel l'unité électrique comprend un module d'alimentation électrique (41) pour alimenter en énergie électrique le module d'amplification et l'unité de commande, et un convertisseur électrique (42) adapté pour extraire de l'énergie électrique du premier ou du deuxième connecteur et pour alimenter en énergie électrique le troisième connecteur à un courant ou à une tension contrôlé, dans lequel le convertisseur électrique est adapté pour alimenter en énergie électrique le troisième connecteur à une tension absolue inférieure à une tension absolue reçue au niveau du premier ou du deuxième connecteur.

2. Appareil selon la revendication 1, dans lequel une tension nominale du troisième connecteur (25) ou câble (24) est inférieure à une tension nominale du premier et du deuxième connecteurs (21, 22) ou câbles (3).

3. Appareil selon la revendication 1, dans lequel l'unité électrique comprend en outre un commutateur (43) adapté pour relier sélectivement le troisième connecteur au convertisseur électrique, dans lequel le commutateur est commandé par l'unité de commande (50).

4. Appareil selon la revendication 1, dans lequel l'unité électrique comprend en outre un module de protection contre les défauts (43) adapté pour déclencher la déconnexion du troisième connecteur du convertisseur électrique en réponse à un état de défaut.

5. Appareil selon la revendication 1, dans lequel le module d'insertion et/ou le module d'extraction comprend un filtre optique (64) conçu pour sélectionner des signaux optiques à insérer, à extraire ou à transférer en fonction de la longueur d'onde.

6. Appareil selon la revendication 1, dans lequel le module d'insertion et/ou le module d'extraction comprend un commutateur sélectif de longueur d'onde (72, 75) conçu pour sélectionner des signaux optiques à insérer, à extraire ou à transférer en fonction de la longueur d'onde de manière reconfigurable, dans lequel le commutateur sélectif de longueur d'onde est commandé par l'unité de commande.

7. Appareil selon la revendication 1, dans lequel l'unité électrique comprend une ligne haute tension (49) et le convertisseur électrique comprend un enroulement primaire (90) couplé à la ligne haute tension par l'intermédiaire d'un agencement de commutation (95) et un enroulement secondaire (91) couplé à une borne électrique du troisième connecteur par l'intermédiaire d'un pont redresseur (92), dans lequel l'agencement de commutation (95) est configuré pour alimenter et éviter alternativement l'enroulement primaire (90) du convertisseur électrique, dans lequel l'agencement de commutation est commandé par l'unité de commande.

8. Appareil selon la revendication 1, dans lequel le module d'amplification comprend une source laser de pompe (39), dans lequel l'unité de commande est conçue pour commander un courant d'entraînement de la source laser de pompe.

9. Appareil selon la revendication 1, comprenant en outre un décodeur d'informations de supervision (82) pour décoder des informations de supervision reçues par l'intermédiaire du premier ou du deuxième connecteur.

10. Appareil selon la revendication 1, comprenant en outre une pluralité de trois connecteurs (25), chacun étant adapté pour fixer un troisième câble (24) à l'appareil, chaque troisième connecteur étant conçu pour relier un conducteur électrique du troisième câble au convertisseur électrique pour alimenter en énergie électrique le troisième câble à un courant ou à une tension contrôlé et pour relier un conducteur optique du deuxième câble à au moins un port parmi un port d'insertion optique du module d'insertion et un port d'extraction optique du module d'extraction.

11. Appareil selon la revendication 10, dans lequel la pluralité de troisièmes connecteurs sont reliés en parallèle à une sortie (44, 94) du convertisseur électrique.

12. Appareil selon la revendication 1, dans lequel le premier et le deuxième connecteurs comprennent chacun des ports optiques bidirectionnels et l'unité optique comprend un premier chemin optique pour acheminer des signaux optiques depuis le premier connecteur vers le deuxième connecteur et un deuxième chemin optique pour acheminer des signaux optiques depuis le deuxième connecteur vers le premier connecteur.

13. Système de communication sous-marin (1) comprenant un appareil de distribution (4) selon la revendication 1 relié au premier, au deuxième et au troisième câbles (3, 24), dans lequel au moins un câble parmi le premier et le deuxième câbles est conçu pour relier l'appareil de distribution à une station en mer (2).

14. Système selon la revendication 13, dans lequel le troisième câble est conçu pour relier directement ou indirectement l'appareil de distribution à un2 dispositif de mesure (11) afin d'alimenter en énergie électrique le dispositif de mesure à une tension ou à un courant contrôlé et afin d'envoyer des données de mesure modulées sur des signaux optiques à l'appareil de distribution.

15. Système selon la revendication 13 ou 14, dans lequel le troisième câble est conçu pour relier directement ou indirectement l'appareil de distribution à un robot (12, 15) afin d'alimenter en énergie électrique le robot à une tension ou à un courant contrôlé et afin d'envoyer des données de commande modulées sur des signaux optiques au robot.
